# EUROPEAN PATENT APPLICATION

(11) **EP 4 521 330 A1**
(43) Date of publication of application: **12.03.2025**
(21) Application number: 23799413.2
(22) Date of filing: 22.03.2023
(51) Int. Cl.: G06Q 50/04, G05B 19/418

(54) **MANUFACTURING EVALUATION SYSTEM**

(30) Priority: 02.05.2022 JP 2022076289
(71) Applicant: Hitachi, Ltd., Tokyo 100-8280 (JP)
(72) Inventor: NISHIKAWA, Kenji, Tokyo 100-8280 (JP); AMASAKI, Shimpei, Tokyo 100-8280 (JP); KONO, Ippei, Tokyo 100-8280 (JP)
(74) Representative: Strehl & Partner mbB
(86) International application number: PCT/JP2023/011094
(87) International publication number: WO 2023/214481

(57) **Abstract**

A manufacturing evaluation system that evaluates a cost incurring in a manufacturing process includes: a manufacturing process analysis unit configured to accept 3-dimensional CAD data as an input and analyze a manufacturing process; a quality analysis unit configured to analyze a finishing process of manufacturing; an environment load analysis unit configured to analyze an environment load incurring in the manufacturing process; and an analysis result display unit configured to display an analysis result.

## Description

### Technical Field

The present invention relates to a manufacturing evaluation system.

### Background Art

An apparatus that calculates an energy consumption amount or a power consumption amount of a manufacturing apparatus is disclosed in JP2012-93984A. As disclosed in JP2012-93984A, "a power consumption amount display apparatus of a machine tool works an object to be worked in accordance with a working program. The machine tool includes a first power consumption element, a second power consumption element, and a third power consumption element. The first power consumption element consumes power in a working state where the object to be worked is worked by executing the working program. The second power consumption element consumes power to enter a driving preparation state so the working program can be executed when an instruction to start execution of the working program is output in the non-working state. The third power consumption element consumes power independently of the execution of the working program in the non-working state. The power consumption amount display apparatus includes a working state determination unit, a power consumption amount measurement unit, and a display unit. The working state determination unit determines a working state, a driving preparation state of the non-working state and a driving preparation OFF state of the non-working state. The power consumption amount measurement unit measures a power consumption amount of the machine tool while the working state determination unit determines the non-working state, and measures at least one of a power consumption amount in the driving preparation state and a power consumption amount in the driving preparation OFF state. The display unit displays the power consumption amount measured by the power consumption amount measurement unit. When a main power switch for supplying power to the machine tool is turned on, the working state is a state where the object to be worked is worked by executing the working program. The non-working state is a state where the working program is not executed. The driving preparation state is a state where the first power consumption element does not consume power and the second power consumption element consumes power in the non-working state. The driving preparation OFF state is a state where the first power consumption element and the second power consumption element do not consume power and the third power consumption element consumes power in the non-working state".

A simulator and a program estimating a manufacturing cost are disclosed in JP2009-187477A. JP2009-187477A discloses that "a cost estimate parameter optimization method, a cost simulation apparatus, and a program capable of obtaining cost without modification of a system even in a specification condition indicating how much daily added cost data is complicated is provided". As disclosed in JP2009-187477A, "a cost simulation apparatus includes a condition generation mechanism that generates a specification condition parameter for narrowing a cost. The cost simulation apparatus searches for a component with a similar cost and a similar speciation from a database, determines and instructs factors indicating specification conditions of the components becoming a price change element, weights and distributes a difference in a price to each factor, and registers the factor as a condition parameter".

Visualization of a power consumption amount of a manufacturing facility contributes to not only a reduction in a production cost but also to implementation of a carbon neutrality in a manufacturing industry. By loading information regarding a manufacturing facility of a manufacturing process that is a process downstream of an engineering chain to a design process that is a process upstream of the engineering chain, it is possible to inhibit power consumption of the manufacturing process itself and it also enables energy-saving design of a product itself, which can result in reduction in power consumption in the manufacturing process. Through tuning in a design stage, it is also possible to prevent a fault occurring in the engineering chain. Therefore, a system that visualizes power consumption details of a facility in the manufacturing process and loads information regarding the power consumption details of the facility not only to a manufacturing field but also to other processes is important. JP2012-93984A discloses a power consumption display apparatus that displays power consumption of a machine tool. Here, the power consumption display apparatus compares a working state and a non-working state and mainly obtains power consumption amounts of a rotational shaft, a table driving shaft, a coolant pump. Accordingly, by visualizing a change in a power consumption amount of the working process, extracting a non-working state, and stopping driving of the coolant pump or the number of rotations of the rotational shaft of the portion, it is possible to reduce unnecessary power consumption. It is considered that contribution to a constant process improvement is achieved by delivering Information regarding power consumption to a manager who controls and operates the machine tool, such as an operator of a machine tool or a programmer who generates an NC program. However, there are various portions that consume power in the machine tool, such as a temperature controller, a mist collector, a control panel, and a compressor. In particular, the compressor or the like is at a level at which a power consumption amount is significant and cannot be ignored. For the power consumption of the machine tool, power consumption or energy generated during refining of metal that is a work material is not used for calculation other than driving of the facility. Further, limited information regarding a power consumption amount is limited to an improvement in process in a manufacturing field that is a utilization place, and it is difficult to utilize the information in energy saving design in an upstream process in which a ripple effect can be targeted.

JP2009-187477A discloses a simulator capable of estimating a manufacturing cost from specification conditions of a product or a component. The simulator narrows parameters calculated from an accumulated database and obtains a manufacturing cost. In costs incurring in manufacturing processes, a personnel cost corresponding to a labor expense, a utility expense or a depreciation expense corresponding to an expenditure, a material purchase expense corresponding to a material cost, and the like are considered to be basic. However, an environment load of the manufacturing is not included in the cost incurring in the manufacturing process. It is necessary to calculate CO2 emissions from a consumed power amount and include a cost of the CO2 emissions. Since there is no method of obtaining a detailed breakdown of the power consumption in a manufacturing process, it is difficult to improve the process and achieve inhibition of power consumption or energy saving design.

Accordingly, an object of the present disclosure is to provide a manufacturing evaluation system that forms a database of power consumption details of a facility in a manufacturing process and calculates a manufacturing cost, a quality cost influencing generation and functionality of a product, and an environment cost estimated from a power consumption amount of a manufacturing process, and the like. A unit that displays a calculation result as a graph and loads the database and graph data in a process other than the manufacturing process is also provided.

To achieve the above object, according to an aspect of the invention, a manufacturing evaluation system that evaluates a cost incurring in a manufacturing process includes: a manufacturing process analysis unit configured to accept 3-dimensional CAD data as an input and analyze a manufacturing process; a quality analysis unit configured to analyze a finishing process of manufacturing; an environment load analysis unit configured to analyze an environment load incurring in the manufacturing process; and an analysis result display unit configured to display an analysis result.

According to a representative form of the present disclosure, it is possible to form a database of power consumption details of a facility in a manufacturing process, calculate a manufacturing cost, a quality cost influencing generation and functionality of a product, and an environment cost estimated from a power consumption amount of the manufacturing process, and load the database and graph data in a process other than the manufacturing process.

The other tasks, configurations, and advantages will be apparent from the following embodiments.

### Brief Description of Drawings

[Fig. 1] FIG. 1 is a diagram illustrating an example of a schematic configuration of a manufacturing evaluation system according to Embodiment 1.
[Fig. 2] FIG. 2 is a diagram illustrating an example of a detailed configuration of the manufacturing evaluation system in FIG. 1.
[Fig. 3] FIG. 3 is a diagram illustrating an example of an operation flow of the manufacturing evaluation system in FIG. 1.
[Fig. 4] FIG. 4 is a diagram illustrating an example of an environment cost calculation unit.
[Fig. 5] FIG. 5 is a diagram illustrating an example of an input GUI of the manufacturing evaluation system in FIG. 1.
[Fig. 6] FIG. 6 is a diagram illustrating an example of an output GUI of the manufacturing evaluation system in FIG. 1.
[Fig. 7] FIG. 7 is a diagram illustrating an example of a detailed configuration of a manufacturing evaluation system according to Embodiment 2.
[Fig. 8] FIG. 8 is a diagram illustrating an example of a schematic configuration of a manufacturing evaluation system according to Embodiment 3.
[Fig. 9] FIG. 9 is a diagram illustrating loading of information in a network by the manufacturing evaluation system according to Embodiment 3.

### Description of Embodiments

Hereinafter, embodiments will be described with reference to the drawings.

### [Embodiment 1]

In the present embodiment, an example of a manufacturing evaluation system will be described. A manufacturing evaluation system 100 according to the present embodiment includes a processor, a main storage device, an auxiliary storage device, an input device, an output device, a network I/F, and a bus connecting them to each other as a hardware configuration. The manufacturing evaluation system 100 can be implemented by, for example, a general information processing apparatus such as a personal computer, a workstation, or a main frame. The manufacturing evaluation system 100 may be implemented by a plurality of information processing apparatuses. Functional units ("~ units") to be described below are implemented by reading data or programs stored in the auxiliary storage device to the main storage device and executing processes determined by the programs. The functional units ("~ units") may be implemented by, for example, a dedicated circuit such as a field programmable gate array (FPGA), an application specific integrated circuit (ASIC), or a complex programmable logic device (CPLD).

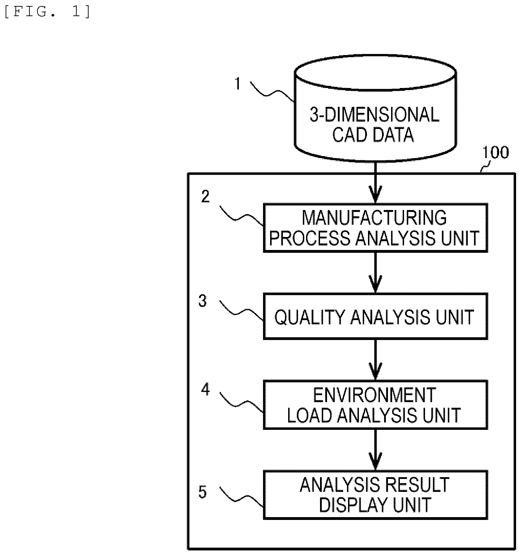

FIG. 1 is a diagram illustrating an example of a schematic configuration of the manufacturing evaluation system 100 according to Embodiment 1. The manufacturing evaluation system 100 accepts an input of 3-dimensional CAD data 1. The manufacturing evaluation system 100 includes a manufacturing process analysis unit 2, a quality analysis unit 3, an environment load analysis unit 4, and an analysis result display unit 5. The 3-dimensional CAD data 1 input to the manufacturing process analysis unit 2 includes a manufacturing method until a material is worked into a target shape, a manufacturing lead time including a preparation time or a working time, and labor data such as a personnel cost or a facility cost. The manufacturing process analysis unit 2 analyzes the input 3-dimensional CAD data 1 and calculates a process proposal (manufacturing method) and costs of a manufacturing cost. When the manufacturing method obtained by the manufacturing process analysis unit 2 is input to the quality analysis unit 3, the quality analysis unit 3 performs cost calculation in a finishing process (analyzes the finishing process). Here, the quality analysis unit 3 outputs a cost related to quality from variation in dimensional tolerance determined in a design specification. Subsequently, the environment load analysis unit 4 calculates a power consumption amount from the manufacturing method obtained by the manufacturing process analysis unit 2, facility data, material quality data, and the manufacturing lead time, and calculates and outputs an environment cost related to an environment load (analyzes an environment load generated in a manufacturing process). The manufacturing cost, the quality cost, and the environment cost obtained in this manner are displayed by the analysis result display unit 5.

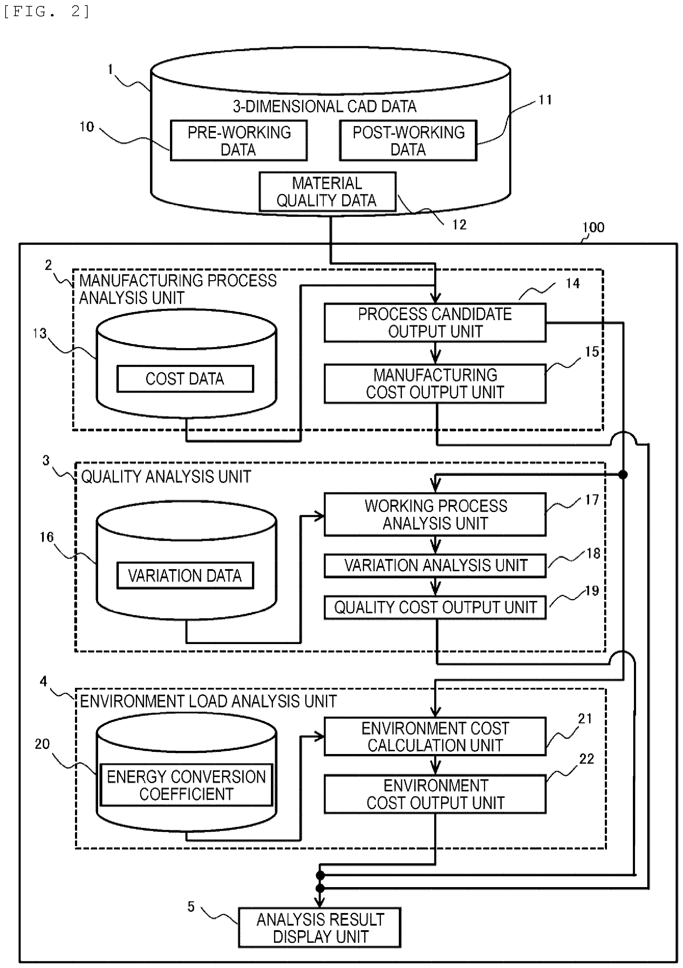

An example of a detailed configuration of the manufacturing evaluation system 100 will be described with reference to FIG. 2. The 3-dimensional CAD data 1 includes pre-working data 10, post-working data 11, and material quality data 12. For example, by taking a difference between the post-working data 11 and the pre-working data 10, a working amount can be obtained and the working amount can be applied as a parameter for calculating a working lead time. The material quality data is specifically a quality of a worked material and is used when a working condition or an environment load is calculated. The manufacturing process analysis unit 2 has the cost data 13 as a database. The cost data 13 includes a database of costs related to manufacturing, such as a personnel cost corresponding to a labor expense, a utility expense or a depreciation expense corresponding to an expenditure, and a material purchase expense corresponding to a material cost. A process candidate output unit 14 outputs a plurality of process proposals. The process candidate output unit 14 outputs the plurality of process proposals including a process proposal A for molding by machine working, a process proposal B for molding all from a block material by a highly precise 5-axis working machine, a process proposal C for molding by a tri-axis working machine and laser cladding, and the like from a sheet metal working of a plate material. The process candidate output unit 14 may obtain the process proposals by a commercially available manufacturing simulator or calculate a process proposals manually input in combination from facilities owned in a factory. Subsequently, a manufacturing cost output unit 15 outputs a manufacturing cost of each process candidate. In short, the manufacturing cost output unit 15 performs cost calculation by inputting CAD data of the 3-dimensional CAD data 1, the database of the cost data 13, and the process proposals output from the process candidate output unit 14 as input parameters (as a parameter input) into a calculation formula prepared in advance and outputs the manufacturing cost. For example, in the case of a working process for a metal component in which a machine tool is used, a manufacturing time is obtained from the CAD data and a working condition and a facility condition in the database of the cost data 13. When the working condition is expressed by feed speed F of a cutting tool, an axis cutout ap, and a radial cutout ae and a working volume obtained from the CAD data is M, a manufacturing time T is obtained with T = M/(F × ap × ae). The manufacturing time T may be used to calculate a change expense of the manufacturing cost and a value calculated by multiplying a labor rate which is a personnel cost by the manufacturing time T may be obtained as a labor expenses of the change expense. By using a value obtained by a constant ratio by the manufacturing time as a setup time, a setup expense may be added to the change expense. Further, a material cost calculated by obtaining a mass or a volume of a worked material from the CAD data and multiplying by a material unit price of the database may be added to the change expense. The manufacturing cost output unit 15 outputs the manufacturing cost by adding the change expense including the labor expense, setup expense, and material costs, to data regarding the fixed costs stored in the cost data 13.

The quality analysis unit 3 has the variation data as a database. Examples of the variable data include an artificial variation by work of a person that is a factor of the variation, a variation of a mechanical factor incurring due to a tool deflection or the like, and a variation by a quality of an unworked material. The quality analysis unit 3 stores the variation data as a variation database. A working process analysis unit 17 extracts a portion of a finishing process related to quality or accuracy of a product and performs process analysis. To achieve target dimensional tolerance, a variation analysis unit 18 analyzes a working condition or a working time necessary to use the database. From the series of operations, a quality cost output unit 19 obtains a cost related to quality. In short, the quality cost output unit 19 performs cost calculation by inputting data of the working condition and the working time output from the variation analysis unit 18 as input parameters (as a parameter input) into a calculation formula prepared in advance and outputs the quality cost. For example, in the case of a working process for a metal component in which a machine tool is used, the variation analysis unit 18 obtains a tool or working condition, and a working time used in the finishing working process. Then, when the tool to be used is determined, a tool cost can be obtained. The quality cost output unit 19 may obtain a labor expense by multiplying a labor rate that is a personnel cost by the working time. The quality cost output unit 19 may calculate, as a quality cost, a value obtained by adding a cost such as the tool expense related to the finishing working and a labor expense.

Subsequently, the environment load analysis unit 4 has an energy conversion coefficient 20 as a database. The energy conversion coefficient 20 is primarily a power database of each manufacturing facility. For example, in the case of a machine tool, functions or facilities such as a spindle motor, a coolant pump, a compressor are configured. The manufacturing evaluation system 100 stores the power consumption of each of the functions and facilities as a database in the energy conversion coefficients 20. A detailed breakdown of a power consumption amount is obtained by multiplying power consumption obtained using a database of power consumption input as the parameter input and a breakdown of the working lead time obtained by the process candidate output unit 14. When the power consumption amount is calculated, the environment load analysis unit 4 obtains CO2 emissions using a specific energy consumption and the environment cost calculation unit 21 calculates an environment cost based on the CO2 emission. An environment cost output unit 22 outputs a calculation result. The output results are input and displayed on the analysis result display unit 5 as a result.

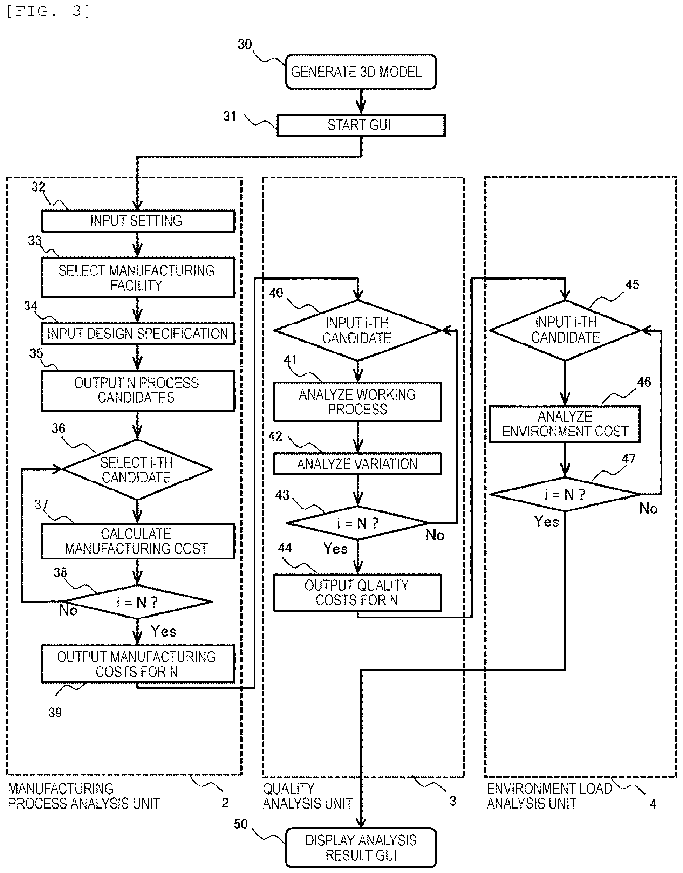

An operation flow of the manufacturing evaluation system 100 will be described with reference to FIG. 3. In step 30, a 3D model (3-dimensional CAD data) is generated. In step 31, the manufacturing evaluation system 100 starts a GUI of the manufacturing evaluation system 100. In step 32, a setting is input on the GUI. In steps 33 and 34, an applicable manufacturing facility is selected and a necessary design specification such as dimensional tolerance or surface roughness is input to the manufacturing evaluation system 100. In step 35, the manufacturing cost output unit 15 outputs process candidates in the manufacturing process analysis unit 2. Here, an example in which the number of the output process candidates is N will be described. In step 36, the manufacturing process analysis unit 2 selects an i-th process candidate. In step 37, the manufacturing cost output unit 15 calculates an i-th manufacturing cost. In step 38, the quality analysis unit 3 checks the number of process candidates. When all manufacturing costs of N process candidates are not calculated, the step loops until all the manufacturing costs are calculated. In step 39, the quality cost output unit 19 outputs the manufacturing costs for all the N process candidates. Subsequently, the quality analysis unit 3 analyzes the working process of the i-th process candidate in steps 40 and 41, and performs the variation analysis of the finishing process in step 42. In step 43, the quality analysis unit 3 checks the number of process candidates analyzed in steps 40 to 42. When the analysis of all the N process candidates (analysis of steps 40 to 42) does not end, the process returns to step 40 and loops. In step 44, the quality cost output unit 19 outputs the quality cost for all the N process candidates. Subsequently, the environment load analysis unit 4 analyzes the environment cost of the i-th process candidate in steps 45 and 46. In step 47, the number of process candidates of which the environment costs are analyzed among the N process candidates is checked. When the environment costs of all the N process candidates are not analyzed, the process returns to step 45 and loops. In step 50, the analysis result display unit 5 displays an analysis result in which the manufacturing costs, the quality costs, and the environment costs of all the N process candidates are summarized on a GUI.

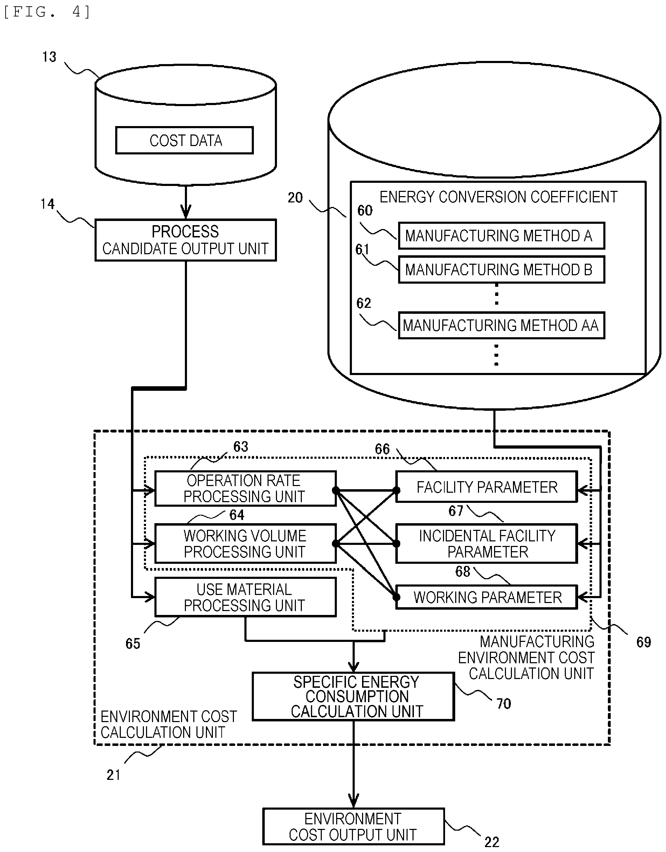

FIG. 4 is a diagram illustrating details of processing of the environment cost calculation unit 21. A database of the energy conversion coefficient 20 in the environment load analysis unit 4 includes databases of a plurality of manufacturing methods such as manufacturing methods A60, B61, and AA62. The manufacturing methods are, for example, a 3-axis machine tool for cut working, a servo press working for sheet metal, and cladding by welding. The database of the energy conversion coefficient 20 stores a power database including an incidental facility related to each manufacturing method. Data included in the cost data 13 is input from the process candidate output unit 14 to the environment cost calculation unit 21. The data included in the cost data 13 is classified into an operation rate processing unit 63, a working volume processing unit 64, and a use material processing unit 65. The operation rate processing unit 63 includes, for example, information regarding a time related to an operation rate such as an actual working time, an idling time, and a stop time. The working volume processing unit 64 includes information obtained from pre-working data and post-working data (working volume processing), such as a removal volume, a deformation amount, and a working distance. The use material processing unit 65 includes information regarding a use amount of a material. The energy conversion coefficient 20 is classified into a facility parameter 66, an incidental facility parameter 67, and a working parameter 68. The facility parameter 66 is a parameter of machinery related to a facility body and examples of the facility parameter 66 include parameters of a coolant pump, a temperature controller, a mist collector, and a control panel in the case of machine tools. Examples of the incidental facility parameter 67 include a parameter of a compressor that supply a compressed air to a facility body. The working parameter 68 is a parameter of machinery determined with a change in a working load and includes a drive motor torque. The environment cost calculation unit 21 obtains a power consumption amount to be used by multiplying a group of the operation rate processing unit 63 and the working volume processing unit 64 and a group of the facility parameter 66, the incidental facility parameter 67, and the working parameter 68. For example, in the case of a coolant pump included in the facility parameter 66, the environment cost calculation unit 21 obtains a power consumption amount of the coolant pump by multiplying an actual operation time of the operation rate processing unit 63 by the parameter of the coolant pump. The environment cost calculation unit 21 also obtains CO2 emissions from a material quantity and amount and carbon dioxide emission intensity to be used in the use material processing unit 65. For example, when a cost is obtained from the CO2 emissions, carbon pricing that is a price of CO2 may be used. The carbon pricing may be a value of a carbon tax used in transaction of CO2 emissions. As the carbon pricing, a value of internal carbon pricing used for facility investment in a private company may be used. For example, when a coefficient of the internal carbon pricing of a certain company is defined with 10000 yen per ton of CO2, an environment cost is calculated by multiplying the CO2 emissions obtained by the environment cost calculation unit 21 by 10000 yen. The value of the environment cost is output from the environment cost output unit 22.

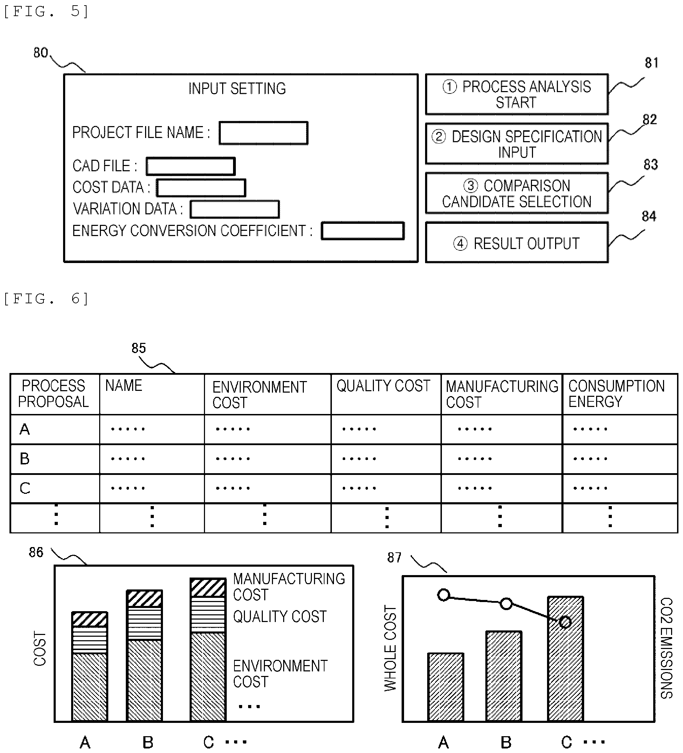

FIG. 5 is a diagram illustrating an example of an input GUI of the manufacturing evaluation system 100. An input setting 80 may include a portion in which a project file name is input and a portion in which the databases of a CAD file setting, the cost data, the variation data, and the energy conversion coefficient are input. A radio button "(1) process analysis start 81" is used for starting analysis. With "(2) design specification input 82," a design specification such as surface roughness or dimensional tolerance is input. With "(3) comparison candidate selection 83," a process candidate desired to be displayed is selected from a plurality of process candidates. With " (4) result output 84," a table or a graph is displayed.

FIG. 6 is a diagram illustrating an example of an output GUI of the manufacturing evaluation system 100. A table 85 shows a process proposal, a name, a manufacturing cost, a quality cost, an environment cost, and consumption energy in a table format. A graph 86 shows a cost of each process proposal in a bar graph. The bar graph indicates a breakdown of the environment cost, the quality cost, and the manufacturing cost. A graph 87 shows a cost of each process proposal in a bar graph and shows an environment load such as CO2 emissions, energy consumption, or a power consumption amount. Since the cost and the environment load are assumed to have a trade-off relationship, trade-off is shown in the graph. For example, when a latest high-efficient apparatus or tool is used, energy consumption can be reduced. However, since a tool unit price increases, a cost is assumed to increase.

### [Embodiment 2]

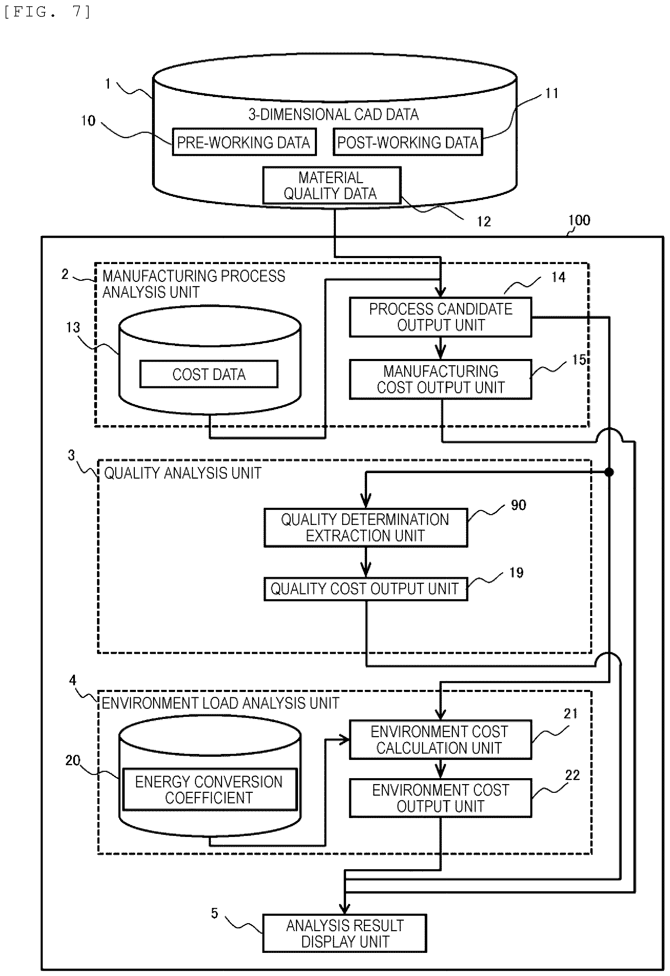

An example of the manufacturing evaluation system 100 including the quality analysis unit 3 that has no variation data will be described with reference to FIG. 7. The quality analysis unit 3 includes a quality determination extraction unit 90 and the quality cost output unit 19. The process candidate output unit 14 of the manufacturing process analysis unit 2 outputs a plurality of process proposals (process candidates). The quality determination extraction unit 90 extracts a finishing process in each process proposal. The quality cost output unit 19 outputs a quality cost calculated from parameters (a time, a tool cost, electricity bill, and the like) of a manufacturing cost relation in the finishing process.

### [Embodiment 3]

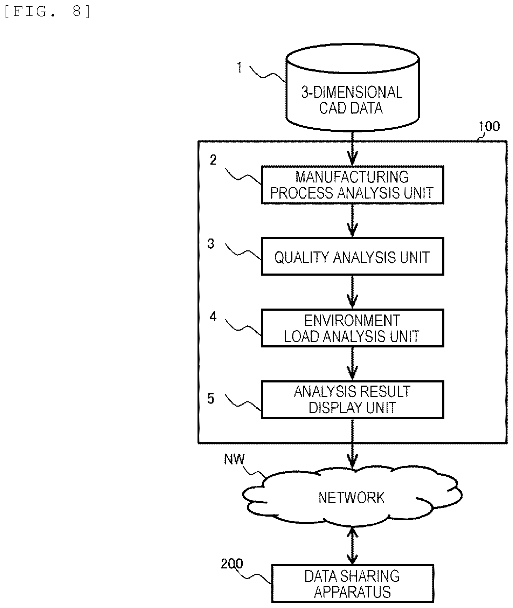

An example of the manufacturing evaluation system 100 according to Embodiment 3 will be described with reference to FIG. 8. The manufacturing evaluation system 100 according to Embodiment 3 is connected to a network NW to which at least one data sharing apparatus 200 is connected. In order to load data calculated in the manufacturing evaluation system 100 not only to a manufacturing process but also a process other than the manufacturing process on an engineering chain including a design process, a utilization method through a network is important. A table or graph data output in the analysis result display unit 5 and numerical data that is a base of the table or the graph data are transmitted to the data sharing apparatus 200 via the network NW. The data sharing apparatus 200 can store the data (the table or the graph data output in the analysis result display unit 5 and at least one piece of data among the numerical data that is the base of the table and the graph data) transmitted from the manufacturing evaluation system 100.

The data sharing apparatus 200 includes a processor, a main storage device, an auxiliary storage device, an input device, an output device, a network I/F, and a bus connecting them to each other as a hardware configuration and can be implemented by, for example, a general information processing apparatus such as a portable terminal, a personal computer, a workstation, or a main frame. The data sharing apparatus 200 may be an in-house server or a cloud. The data sharing apparatus 200 may be shared by a plurality of interested members.

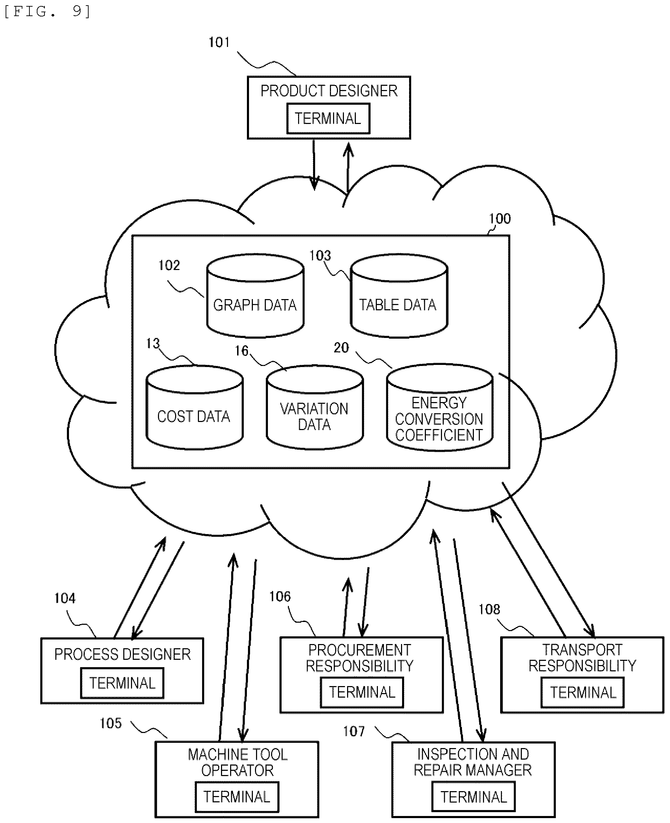

The network NW is used to accumulate, transmit, receive, and share various types of data. A use instance of the network is illustrated in FIG. 9. Examples of data shared with the data sharing apparatus 200 connected to the network NW include graph data 102, table data 103, cost data 13, variation data 16, and the energy conversion coefficient 20. The example illustrated in FIG. 9 is an example in which various stakeholders on an engineering chain use terminals for exchange. For example, a result of evaluation by a product designer using the manufacturing evaluation system 100 by operating a product designer terminal 101 is loaded to the network NW.

The product designer terminal 101, a process designer terminal 104, a machine tool operator terminal 105, a procurement responsibility terminal 106, an inspection and repair manager terminal 107, and a transport responsibility terminal 108 are examples of the data sharing apparatus 200.

The product designer operating the product designer terminal 101 predicts an increase in a future energy unit price from a plurality of process proposals despite a high manufacturing cost and selects a process of which energy consumption is low. Based on the result, a manager of adjustment who operates the procurement responsibility terminal 106 or a manager of transport who operates the transport responsibility terminal 108 adjusts work while viewing set delivery dates. A process designer who operates the process designer terminal 104 or a machine tool operator who operates the machine tool operator terminal 105 updates a situation of a manufacturing line such as a facility update or a new working program to the network NW. In this way, it is possible to update a library of the manufacturing evaluation system 100 used by the product designer who operates the product designer terminal 101. The inspection and repair manager who operates the inspection and repair manager terminal 107 can update the variation data obtained from an inspection result or can predict a plan of facility repair and reflect the plan in the cost data. In this way, when the present system is used, the engineering chain becomes seamless, which leads to implementation of more optimized design and manufacturing.

The present invention is not limited to the above embodiments and includes various modifications. For example, the above embodiments have been described in detail to facilitate understanding of the present invention and are not limited to embodiments including all the above-described configurations. Some of the configurations of a certain embodiment can be replaced with the configurations of another embodiment and the configurations of another embodiment can also be added to the configurations of a certain embodiment. Some of the configurations of each embodiment can be added to, deleted from, and replaced with other configurations.

- 1:: 3-dimensional CAD data
- 2:: manufacturing process analysis unit
- 3:: quality analysis unit
- 4:: environment load analysis unit
- 5:: analysis result display unit
- 13:: cost data
- 16:: variation data
- 20:: energy conversion coefficient
- 80:: input setting
- 100:: manufacturing evaluation system
- 200:: data sharing apparatus
- NW:: network

## Claims

1. A manufacturing evaluation system that evaluates a cost incurring in a manufacturing process, the manufacturing evaluation system comprising:
a manufacturing process analysis unit configured to accept 3-dimensional CAD data as an input and analyze the manufacturing process;
a quality analysis unit configured to analyze a finishing process of manufacturing;
an environment load analysis unit configured to analyze an environment load incurring in the manufacturing process; and
an analysis result display unit configured to display an analysis result.

2. The manufacturing evaluation system according to claim 1,
wherein the manufacturing process analysis unit accepts a working volume of the 3-dimensional CAD data and cost data as a parameter input and calculates a manufacturing cost,
wherein the quality analysis unit accepts a manufacturing time and variation data obtained in the manufacturing process analysis unit as a parameter input and calculates a quality cost,
wherein the environment load analysis unit accepts a working time and an energy conversion coefficient of the manufacturing process analysis unit as a parameter input and calculates an environment cost, and
wherein the analysis result display unit displays a cost incurring in the manufacturing process as the analysis result.

3. The manufacturing evaluation system according to claim 1, wherein the 3-dimensional CAD data includes pre-working data, post-working data, and material quality data.

4. The manufacturing evaluation system according to claim 1, wherein the manufacturing process analysis unit includes a database that has cost data, a process candidate output unit that outputs a plurality of process candidates, and a manufacturing cost output unit that outputs a manufacturing cost of each of the output process candidates.

5. The manufacturing evaluation system according to claim 1, wherein the quality analysis unit includes a database that has variation data, a working process analysis unit that analyzes a working process in the plurality of output process candidates, a variation analysis unit that evaluates a variation in a finishing process of the working process, and a quality cost output unit that obtains a quality cost from a variation result.

6. The manufacturing evaluation system according to claim 1, wherein the environment load analysis unit includes a database that has an energy conversion coefficient necessary to calculate a power consumption amount from power consumption data of each facility, an environment cost calculation unit that calculates an environment cost from parameters such as a power consumption amount of a facility and a specific energy consumption, and an environment cost output unit that outputs the environment cost.

7. The manufacturing evaluation system according to claim 6, wherein the environment cost calculation unit includes an operation rate processing unit that obtains an actual operation time from a database of cost data and a specific energy consumption calculation unit that calculates CO2 emissions from working volume processing for obtaining a working volume changed from pre-working and post-working 3D CAD data, use material processing for determining a material to be used, a facility parameter related to a facility body from an energy conversion coefficient of a manufacturing facility, an incidental facility parameter related to an incidental facility other than the body, a working parameter determined with a load during working, and a specific energy consumption to obtain the environment cost from a calculation result.

8. The manufacturing evaluation system according to claim 1, wherein the analysis result display unit displays cost calculation results in a plurality of process proposals and an environment load evaluation result such as CO2 emissions.

9. The manufacturing evaluation system according to claim 1, wherein the quality analysis unit includes a quality determination extraction unit that extracts a finishing process from a working process in the plurality of output process candidates and a quality cost output unit that obtains a cost in the extracted process.

10. The manufacturing evaluation system according to claim 1,
wherein the manufacturing evaluation system is further connected to a network connected to at least one data sharing apparatus, and
wherein the analysis result display unit transmits the analysis result to the data sharing apparatus to load the analysis result on the network.

11. The manufacturing evaluation system according to claim 10, wherein the analysis result display unit transmits, as the analysis result, at least one piece of data among graph data, table data, cost data, variation data, and an energy conversion coefficient to the data sharing apparatus and loads, as the analysis result, at least one piece of data among the graph data, the table data, the cost data, the variation data, and the energy conversion coefficient on the network.
